# EUROPEAN PATENT APPLICATION

(11) **EP 4 393 843 A1**
(43) Date of publication of application: **03.07.2024**
(21) Application number: 23205771.1
(22) Date of filing: 23.12.2022
(51) Int. Cl.: B65G 1/04, B65G 1/137

(54) **AN AUTOMATED WAREHOUSE SHUTTLE FLOW CONTROLLER AND CORRESPONDING SHUTTLE FLOW CONTROL PROCESS**

(62) Divisional of application: 22216562.3
(71) Applicant: MOVU, 9160 Lokeren (BE)
(72) Inventor: Vandemergel, Luc, 8020 Oostkamp (BE)
(74) Representative: IP HILLS NV

(57) **Abstract**

An automated warehouse shuttle flow controller (700) is configured to control navigation of shuttles (1-7) in an automated warehouse (100) with a racking area (101) comprising one or more racks for storage of goods in bins (10-17) and a pick- and deposit area (102) comprising one or more pick/deposit stations (121). The flow controller (700) is configured to:
- monitor actual locations of shuttles (1-7) within the automated warehouse (100);
- select a shuttle (1-7) to perform a pick/deposit task; and
- navigate the shuttle (1-7) through the automated warehouse (121).
The flow controller (700) is further configured to navigate outbound travelling shuttles (5-7) at a first level (132) and inbound travelling shuttles (2-4) at a second level (131). The pick- and deposit area (102) thereto comprises a transit platform at the first level (132), having at least one recess (134) with sloped passage (133) from the first level (132) to the second level (131).

## Description

### Field of the Invention

The present invention generally relates to controlling the flow of shuttles in an automated warehouse. More particularly, the invention concerns a flow controller and flow control process that allow to improve the overall performance of automated warehouses by reducing the pick- and deposit area surface required in automated warehouses, and/or improving the shuttle density in automated warehouses, and/or reducing the amount of conflicts between shuttles in automated warehouses.

### Background of the Invention

Automated warehouses and automated warehouse shuttle systems are generally known. Warehouses typically include a racking area and a pick- and deposit area. The racking area is typically located in a high part of the warehouse building and comprises relatively large storage structures, also named racks, generally structured along a plurality of substantially parallel lanes. The storage structures are arranged to provide storage locations for goods, stored in goods retainers, named bins. The storage locations may be provided on a plurality of levels within the storage structures. The racking area may be subdivided in sub-areas, each dedicated to a particular class of goods depending on how fast such goods are expected to move. As an example, the racking area may be subdivided in a first sub-area dedicated to class A goods or fast moving goods, a second sub-area dedicated to class B goods that are medium speed moving goods, and a third sub-area dedicated to class C goods that are slow moving goods. The division in sub-areas may help to improve the overall performance of the automated warehouse.

The pick- and deposit area is typically located in a low part of the warehouse building and comprises pick/deposit stations. The pick- and deposit area or low part of the warehouse building is often called the front zone or rear zone of the warehouse. The pick/deposit stations are located on the ground floor and/or on mezzanine constructions in the front zone or rear zone. At a pick/deposit station, an operator prepares orders containing goods collected in the racking area and transferred from the racking area to the pick/deposit station. Orders thereafter leave the warehouse for delivery to clients. At a pick/deposit station, an operator also fills bins with goods delivered at the warehouse for storage in the racking area. These bins are then transferred to and stored in the racking area.

In order to automate delivery and pick up of goods to and from the storage locations, an automated warehouse further comprises an automated shuttle system. Such automated shuttle system generally comprises a track system, a plurality of shuttles, and a shuttle flow controller. The track system comprises at least one pair of rails arranged in a substantially horizontal plane along a lane in the racking area of the warehouse, or more generally speaking, at least one pair of rails along each of the lanes in the racking area of the warehouse, which are generally arranged substantially in parallel to each other, and more preferably, a pair of rails per level and per lane in the racking area of the warehouse. Transverse aisles may connect the substantially parallel lanes, which transverse lanes may or may not be provided with tracks. Additionally, and/or alternatively, lift systems or climbing towers may allow connections between various levels of the storage structure, hence enabling shuttles to move from one level to another level in the racking area. The shuttles, also named mobile robots, are configured to move along the tracks in the racking area, in order to transfer bins containing goods to and from the storage locations in the storage structure. The shuttles also navigate outside the racking area, for instance in the front zone and/or rear zone of the warehouse. A shuttle can for instance enter and exit the racking area at one end or at both ends of a rack. Outside the racking area, the shuttle typically navigates on the floor or a mezzanine construction, along a path that is identified through codes, for instance OR-codes provided on the floor and sensed or scanned by the shuttle while navigating or by visual SLAM (Simultaneous Localization And Mapping) navigation. An automated shuttle system typically comprises a plurality of such automated shuttles that are all controlled by a shuttle flow controller. The shuttle flow controller may form part of a central warehouse management control system that generally manages the storage of goods delivered at the warehouse and the preparation of orders of goods for delivery from the warehouse. The shuttle flow controller has as tasks to stay aware of the actual locations of shuttles in the warehouse, to select which shuttle performs a particular pick/deposit task, and to navigate the shuttle through the warehouse while performing such pick/deposit task.

During a pick/deposit task or pick/deposit cycle, a shuttle deposits a first bin at an empty storage location in the racking area and picks a second bin for transfer to one or more dedicated pick/deposit stations in the pick- and deposit area. Under control of the shuttle flow controller, the shuttle navigates to the rack containing the bin to pick, i.e. the second bin. The shuttle travels via the inbound climbing tower or lift and deposits the first bin at an empty storage location, preferably at the same level as the location where the second bin is stored. After having deposited the first bin, the shuttle travels to the storage location of the second bin, picks the second bin, and returns via the outbound climbing tower or lift to the dedicated pick/deposit station(s). Shuttles travelling from the pick- and deposit area towards the racking area constitute inbound traffic. Shuttles travelling from the racking area towards the pick- and deposit area constitute outbound traffic.

Existing automated warehouses are not optimized in terms of performance, efficiency and/or capacity.

It is an objective of the present invention to improve the performance or efficiency of an automated warehouse. The performance or efficiency of an automated warehouse is for instance improved by an increased amount of pick/deposit tasks that can be performed per time unit, for instance per hour, an increased density of shuttles, i.e. the amount of shuttles simultaneously performing tasks in the warehouse, and/or a reduced amount of incidents, i.e. conflicts or collisions between shuttles navigating through the warehouse. The performance or efficiency of an automated warehouse may also be improved by reducing the surface in the warehouse building that is occupied by the front area and/or rear area. Reduction of the surface of the front and/or rear areas results in increased surface for the racking area, hence in a warehouse with higher storage capacity.

### Summary of the Invention

According to the present invention, one or more of the above-identified objectives are realised by the automated warehouse shuttle flow controller defined in claim 1, the shuttle flow controller being configured to control navigation of shuttles in an automated warehouse with a racking area comprising one or more racks for storage of goods in bins and a pick- and deposit area comprising one or more pick/deposit stations,
wherein the flow controller is configured to:
   - monitor actual locations of shuttles within the automated warehouse;
   - select a shuttle to perform a pick/deposit task wherein the shuttle deposits a bin on a storage location in the racking area and/or picks a bin from a storage location in the racking area for transfer to one or more dedicated pick/deposit stations;
   - navigate the shuttle through said automated warehouse;
   - navigate outbound travelling shuttles, being shuttles travelling from the racking area to the pick- and deposit area, at a first level; and
   - navigate inbound travelling shuttles, being shuttles travelling from the pick- and deposit area to the racking area, at a second level different from the first level,
wherein the pick- and deposit area comprises a transit platform at the first level, the transit platform having at least one recess with sloped passage from the first level to the second level; and
wherein the flow controller is configured to navigate the shuttle from the first level to the second level through the recess after a pick/deposit operation at one of the dedicated pick/deposit stations.

Thus, in advantageous embodiments, outbound traffic and inbound traffic are organised at different levels, i.e. at different heights, at least in the pick- and deposit area but possibly also in the buffer area as will be explained further below. This way, the incident risk is further reduced because collisions between an outbound travelling shuttle and an inbound travelling shuttle are impossible this way. An outbound travelling shuttle may for instance leave the racking area at a level or height that substantially corresponds to the transit level of the pick/deposit stations. The outbound travelling shuttle may then travel to a pick/deposit station along one or more tracks at the transit level. When the shuttle leaves the pick/deposit station, it becomes an inbound travelling shuttle. The inbound travelling shuttle may be moved to a different level, for instance the ground floor of the warehouse, in order to navigate at this level along an inbound path towards the racking area. Apart from avoiding collisions between outbound travelling shuttles and inbound travelling shuttles, organizing the outbound traffic and inbound traffic at different levels may also avoid that front and rear zones must be created in the automated warehouse, hence reducing the surface in the warehouse occupied by front/rear zones by half. Consequently, a greater racking area with a bigger storage capacity can be built, which further contributes to the overall performance of the automated warehouse.

An efficient way to allow a shuttle to move from one level (the outbound traffic level) to another level (the inbound traffic level) after a pick/deposit operation at a pick/deposit station relies on recesses made in the transit platform at first level and sloped passages interconnecting these recesses with the second level. Each recess must have a width exceeding the width of a shuttle such that a shuttle can pass through the recess and travel from the first level to the second level along the sloped passage. A recess and sloped passage may be provided per pick/deposit stations, or a single recess and sloped passage may be shared by shuttles returning from plural pick/deposit stations, the latter implementation however having a higher incident risk than the former. The skilled person will appreciate that alternative implementations can be thought of, enabling a shuttle to move from one level to another, like for instance a lift or a climbing tower, provided for each pick/deposit station or shared by multiple pick/deposit stations.

In sample embodiments of the automated warehouse shuttle flow controller according to the invention, as defined by claim 2,
the first level corresponds to the transit level of the pick/deposit stations and the second level corresponds to the ground level or a mezzanine level of the automated warehouse.

Indeed, as mentioned above, outbound traffic may leave the racking at a level or height that substantially corresponds to the transit level of the pick/deposit stations and may travel on tracks or on a platform at this height, hence providing that vertical or inclined moving of shuttles is not needed. This further adds to the efficiency of the automated warehouse because the shuttles leave the racking immediately at the right level to be handled by operators at the pick/deposit stations, avoiding vertical or inclined movement. Inbound traffic on the other hand may be organised at ground level on the floor of the automated warehouse and consequently may enter the racking at ground level. Using the floor of the warehouse for inbound traffic further enhances the efficiency because no platform or tracks must be constructed for the inbound traffic. Obviously, the skilled person will appreciate that in alternative embodiments, outbound traffic may be organised at ground level and inbound traffic may be organised at an elevated level. In still further alternatives, outbound traffic may be organised at a first elevated level and inbound traffic may be organised at a second elevated level, above or beneath the first elevated level. All these embodiments bring the advantage that collisions between outbound travelling shuttles and inbound travelling shuttles in the pick- and deposit area are impossible. It is also noticed that organising outbound traffic and inbound traffic at different levels or heights can be implemented also in the absence of a buffer area in between the racking area and the pick- and deposit area, with similar advantages: reducing the required space for front/rear zones and reducing incidents and downtime due to collisions between outbound travelling shuttles and inbound travelling shuttles.

In embodiments of the automated warehouse shuttle flow controller according to the present invention, as defined by claim 3,
the flow controller is configured to keep said shuttle in a buffer area between the racking area and the pick- and deposit area in view of occupancy of the racking area by other shuttles or occupancy of the one or more dedicated pick/deposit stations by other shuttles.

Thus, in embodiments of the invention, a buffer area is provided in between the racking area and the pick- and deposit area of the automated warehouse. An inbound travelling shuttle is controlled by the shuttle flow controller to stay in this buffer area when the occupancy of the racking area by other shuttles exceeds a certain level. An outbound travelling shuttle is controlled by the shuttle flow controller to stay in this buffer area when the occupancy of the dedicated pick/deposit stations where the shuttle is travelling to exceeds a certain level. The presence of such buffer area allows to reduce the size of the pick- and deposit area. Capacity to buffer shuttles at individual pick/deposit stations can be reduced substantially, hence reducing the size of pick/deposit stations and consequently also the total surface required for the pick- and deposit area. As the buffer area between the racking area and pick- and deposit area is shared by shuttles travelling to multiple pick/deposit stations and/or by shuttles travelling from multiple pick/deposit stations, its surface is expected to be smaller than the surface required for buffering the shuttles at individual pick/deposit stations. Through buffering shuttles in the buffer area, the shuttle flow controller further controls the amount of shuttles that can navigate simultaneously in the racking area or in sub-areas of the racking area. This way, the density of shuttles in the racking area can be maximized while keeping the probability for collisions at an acceptably low level, resulting in a highly performant automated warehouse with minimal downtime.

In embodiments of the automated warehouse shuttle flow controller according to the present invention, as defined by claim 4,
the buffer area comprises a carrousel, and
the flow controller is configured to keep the shuttle in the carrousel until the occupancy of the racking area has dropped below a predefined level or until the occupancy of the one or more dedicated pick/deposit stations has dropped below a predefined level.

Indeed, the buffer area in between the racking area and the pick- and deposit area may preferably be implemented as a carrousel, i.e. a closed loop like for instance a circle, an ellipsoid, a rounded rectangle, etc., wherein the shuttle(s) is/are navigated until the occupancy of their respective destination(s) has dropped below a certain level. In case the shuttle is an inbound travelling shuttle, the shuttle flow controller shall allow the shuttle to leave the carrousel as soon as the occupancy of the racking area (or the sub-area wherein the shuttle has to pick/deposit a bin) has dropped below a certain level. In case the shuttle is an outbound travelling shuttle, the shuttle flow controller shall allow the shuttle to leave the carrousel as soon as the occupancy of one of the pick/deposit stations where the shuttle is travelling to has dropped below a certain level. Implementing the buffer area as a carrousel further reduces the incident level - in the carrousel buffered shuttles are travelling at equal speed in an endless loop - and therefore contributes to improving the performance of the warehouse. The carrousel may be implemented with plural exit points, i.e. points where a buffered shuttle can leave the carrousel towards the racking area or towards the pick- and deposit area. The carrousel optionally also may be implemented as a closed loop with one or plural subloops that allow a shuttle to travel faster to its exit point once the shuttle flow controller allows the shuttle to leave the buffer area towards a particular destination.

In sample embodiments of the automated warehouse shuttle flow controller according to the present invention, as defined by claim 5,
the buffer area comprises a first carrousel at the first level and a second carrousel at the second level; and
the flow controller is configured to:
   - keep the shuttle in the first carrousel until the occupancy of the one or more dedicated pick/deposit stations has dropped below a predefined level when the shuttle is outbound travelling, and/or
   - keep the shuttle in the second carrousel until the occupancy of the racking area has dropped below a predefined level when the shuttle is inbound travelling.

Thus, in advantageous embodiments, outbound travelling shuttles and inbound travelling shuttles are also separated from each other in the buffer area by implementing a first buffer zone for outbound travelling shuttles at a first level, and implementing a second buffer zone for inbound travelling shuttles at a second level, different from the first level. The buffer zone for outbound travelling shuttles may be implemented as a first carrousel wherein outbound travelling shuttles are kept until the occupancy of one of their respective destined pick/deposit stations has dropped below a certain occupancy level. Similarly, the buffer zone for inbound travelling shuttles may be implemented as a second carrousel, at a level above or below the first carrousel, wherein inbound travelling shuttles are kept until the occupancy of the racking area (or a particular sub-area of the racking area) has dropped below a certain occupancy level. Implementing the buffer zones for outbound traffic and inbound traffic at different levels further enhances the overall performance of the automated warehouse as incident risks further drop and additional space is freed up for the racking area.

In sample embodiments of the automated warehouse shuttle flow controller according to the invention, as defined by claim 6,
a pick/deposit station has a plurality of shuttle spots; and
the flow controller is configured to keep the shuttle in the buffer area until one of the shuttle spots is unoccupied.

As an example, each pick/deposit station may have 3 shuttle spots. An outbound travelling shuttle destined to a particular pick/deposit station will then be kept in the buffer area until at least one of the 3 shuttle spots of the destined pick/deposit station is free.

In a sample embodiment of the automated warehouse shuttle flow controller according to the invention, as defined by claim 7,
one or more of the shuttle spots comprise electric charging means to fast-charge the shuttle during a pick/deposit operation at the pick/deposit station.

Indeed, the shuttles typically are battery-operated electric-driven robots the battery of which needs to be charged regularly. The performance of the warehouse consequently is further enhanced when shuttle batteries are charged while the shuttles are buffered at the pick/deposit station. This is made possible in embodiments of the invention by integrating electric charging means, for instance sliding contacts or a wireless battery charger, in the shuttle spots at the pick/deposit stations. Alternatively or supplementarily, the charging of shuttles takes place in the racking, for instance while climbing on a climbing track.

In sample embodiments of the automated warehouse shuttle flow controller according to the present invention, as defined by claim 8,
the flow controller is configured to keep the shuttle in the buffer area until the amount of shuttles in the racking area has dropped below a predefined number.

The skilled person will appreciate that various parameters may be considered to monitor the occupancy of the racking area. One parameter that could be considered is for instance the amount of shuttles instantly present in the racking area. As the flow controller monitors the location of all shuttles in the warehouse, it knows at any point in time how many shuttles are navigating within the racking area. The acceptable occupancy level may then be a simple maximum value, such that no further inbound travelling shuttles are allowed to enter the racking area if that maximum number of shuttles is already present in the racking area. As soon as the amount of shuttles in the racking area again drops below the maximum value, inbound travelling shuttles kept in the buffer zone are again allowed to enter the racking area.

In sample embodiments of the automated warehouse shuttle flow controller according to the invention, as defined by claim 9,
the shuttle is selected to perform a pick/deposit task in a sub-area of the racking area, the sub-area being dedicated to either store slow moving goods, medium speed moving goods, or fast moving goods; and
the flow controller is configured to keep the shuttle in the buffer area until the amount of shuttles in the sub-area of the racking area has dropped below a predefined number.

Indeed, as an alternative to the amount of shuttles present in the racking area, the flow controller may consider the amount of shuttles present in a specific sub-area of the racking area as occupancy parameter. The racking area may for instance be subdivided in sub-areas according to the moving speed of goods, i.e. the anticipated time between entering and leaving the automated warehouse. As an example, a first sub-area of the racking area, closest to the pick- and deposit area, may contain racks wherein class-A goods are stored that are moving fast; a second sub-area, at mid distance from the pick- and deposit area, may contain racks wherein class-B goods are stored that are moving at average speed; and a third sub-area, farthest from the pick- and deposit area, may contain racks wherein class-C goods are stored that are moving slowly. In another example, the sub-areas may be organized horizontally, on top of each other. The lower levels of the racks in the racking area may for instance constitute a first sub-area for class-A goods that are moving fast, the middle levels of the racking area may constitute a second sub-area of class-B goods that are moving at medium speed, and the higher levels of the racking area may constitute a third sub-area of class-C goods that are moving slowly. For larger installations a combination of both strategies will further improve the attained throughput. In order to determine if an inbound travelling shuttle must be kept in the buffer zone or is allowed to enter the racking area, the flow controller may consider the amount of shuttles already present in the sub-area where the shuttle is heading for as occupancy parameter. When the amount of shuttles present in the sub-area where the shuttle has to pick a bin is below a certain maximum value, the shuttle is allowed to leave the buffer area and enter the racking area, irrespective of the amount of shuttles that is present in other sub-areas of the racking area. The skilled person will appreciate that in such embodiment, the maximum number of shuttles allowed to simultaneously enter a sub-area may be different for different sub-areas, because the maximum number of shuttles allowed may for instance account for the size of the sub-area. It is noted that in embodiments that consider the occupancy of sub-areas as parameter, a pick/deposit task assigned to a shuttle preferably comprises a bin deposit subtask and a bin pick subtask that can be executed in one and the same sub-area. Should the bin deposit subtask and bin pick subtask have to be executed in different sub-areas of the racking area, the flow controller may consider the occupancy of each of the sub-areas where the shuttle has to travel through, or the combined occupancy of the sub-areas where the shuttle has to travel through as parameter to decide when an inbound travelling shuttle is allowed to leave the buffer area.

It is noticed that it is possible that a single task is assigned to a shuttle, for instance only a picking task or a deposit task. It is also possible that tasks are assigned wherein depositing a bin is performed in one racking aisle and picking of another bin is performed in a different racking aisle.

In sample embodiments of the automated warehouse shuttle flow controller according to the present invention, as defined by claim 10,
the shuttle flow controller is configured to keep the shuttle in the buffer area to re-sequence the order of shuttles.

Indeed, in addition to controlling the occupancy level of the racking area and the pick- and deposit area, embodiments of the shuttle flow controller according to the invention may also exploit the buffer area for resequencing shuttles. The shuttles then do not necessarily enter/leave the buffer area in a first-in-first-out order. Resequencing shuttles may further improve the efficiency and overall performance of the automated warehouse as shuttles may be sequenced for instance in view of timings or schedules received from the central warehouse management control system that generally manages the storage of goods delivered at the warehouse and the preparation of orders of goods for delivery from the warehouse.

In addition to a shuttle flow controller as defined by claim 1, the present invention also concerns an automated warehouse shuttle flow control process as defined by claim 11, for controlling navigation of shuttles in an automated warehouse with a racking area comprising one or more racks for storage of goods in bins and a pick- and deposit area comprising one or more pick/deposit stations, the flow control process comprising:
- monitoring actual locations of shuttles within the automated warehouse;
- selecting a shuttle to perform a pick/deposit task wherein the shuttle deposits a bin on a storage location in the racking area and/or picks a bin from a storage location in the racking area for transfer to one or more dedicated pick/deposit stations;
- navigating the shuttle through said automated warehouse;
- navigating outbound travelling shuttles, being shuttles travelling from the racking area to the pick- and deposit area, at a first level; and
- navigating inbound travelling shuttles, being shuttles travelling from the pick-and deposit area to the racking area, at a second level different from the first level,

wherein the pick- and deposit area comprises a transit platform at the first level, the transit platform having at least one recess with sloped passage from the first level to the second level; and
wherein the flow control process further comprises:
   navigating the shuttle from the first level to the second level through the recess after a pick/deposit operation at one of the dedicated pick/deposit stations.

Further, the present invention also concerns an automated warehouse as defined by claim 12, the automated warehouse comprising:
- a racking area comprising one or more racks for storage of goods in bins;
- a pick- and deposit area comprising one or more pick/deposit stations;
- a plurality of shuttles; and
- a shuttle flow controller configured to:
   - monitor actual locations of shuttles within the automated warehouse;
   - select a shuttle to perform a pick/deposit task wherein the shuttle deposits a bin on a storage location in the racking area and/or picks a bin from a storage location in the racking area for transfer to one or more dedicated pick/deposit stations;
   - navigate the shuttle through the automated warehouse;
   - navigate outbound travelling shuttles, being shuttles travelling from the racking area to the pick- and deposit area, at a first level; and
   - navigate inbound travelling shuttles, being shuttles travelling from the pick-and deposit area to the racking area, at a second level different from the first level,

wherein the pick- and deposit area comprises a transit platform at the first level, the transit platform having at least one recess with sloped passage from the first level to the second level; and
wherein the flow controller is configured to navigate the shuttle from the first level to the second level through the recess after a pick/deposit operation at one of the dedicated pick/deposit stations.

It is noticed that the shuttle flow controller also may monitor the battery SOC (State of Charge) of the shuttles and may assign battery charge tasks to the shuttles if a full pick-and-deposit cycle cannot be executed without extra battery charging.

### Brief Description of the Drawings

Fig. 1 shows an example of an automated warehouse 100 wherein an embodiment of the shuttle flow control process according to the present invention is implemented;
Fig. 2A and Fig. 2B illustrate an example racking system 200 as may be used in the racking area of an automated warehouse as shown in Fig. 1, wherein an embodiment of the shuttle flow control process according to the present invention is implemented;
Fig. 3 illustrates an example implementation of the buffer area and pick- and deposit area in an automated warehouse as shown in Fig. 1, wherein an embodiment of the shuttle flow control process according to the present invention is implemented;
Fig. 4 is a scheme illustrating the inbound flow of shuttles in an automated warehouse as shown in Fig. 1, wherein an embodiment of the shuttle flow control process according to the present invention is implemented;
Fig. 5 is a scheme illustrating the outbound flow of shuttles in an automated warehouse as shown in Fig. 1, wherein an embodiment of the shuttle flow control process according to the present invention is implemented;
Fig. 6 is a scheme illustrating the combined inbound and outbound flows of shuttles in an automated warehouse as shown in Fig. 1, wherein an embodiment of the shuttle flow control process according to the present invention is implemented; and
Fig. 7 shows an example embodiment of a computing system 700 suitable for implementing embodiments of the shuttle flow controller according to the present invention.

### Detailed Description of Embodiment(s)

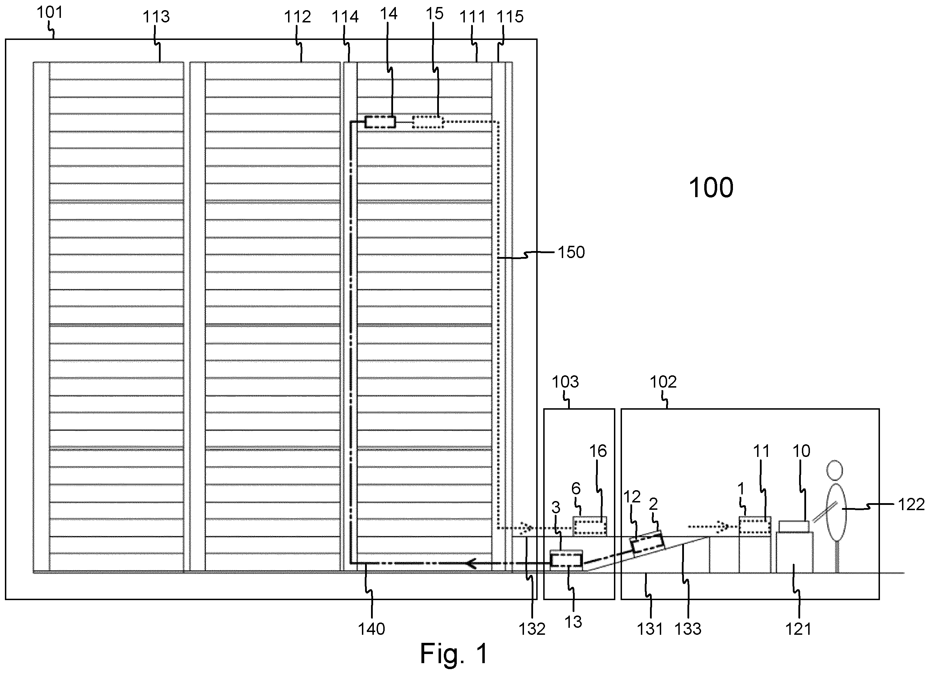

Fig. 1 shows an automated warehouse 100 comprising a racking area 101, a pick- and deposit area 102, and a buffer area 103. The racking area 101 is divided in three sub-areas: a first sub-area comprising racks 111 wherein class-A goods are stored, i.e. goods that travel at fast speed and consequently are expected to be stored for a short time in the automated warehouse 100; a second sub-area comprising racks 112 wherein class-B goods are stored, i.e. goods that travel at average speed and therefore are expected to be stored a moderate time in the automated warehouse 100; a third sub-area comprising racks 113 wherein class-C goods are stored, i.e. goods that travel at slow speed and consequently are expected to be stored for a long time in the automated warehouse 100. The skilled person will appreciate that "fast", "average", "slow", "short", "moderate" and "long" are relative terms that can be configured differently in different automated warehouses for different applications. Typically, the first sub-area for class-A goods shall be located at short distance from the pick- and deposit area 102, the second sub-area for class-B goods shall be located at medium distance from the pick- and deposit area 102, and the third sub-area for class-C goods shall be located at far distance from the pick- and deposit area 102. Also the terms "short", "medium", and "far" are relative terms that can be configured differently in different automated warehouses. The size of the sub-areas, e.g. the surface occupied by each of the sub-areas, may be equal or may be different to account for anticipated volumes of the goods of each of the classes. Although the example of Fig. 1 shows 3 sub-areas for 3 respective good classes, the skilled person will appreciate that in other example automated warehouses, the racking area may be divided in an amount of sub-areas that differs from 3 to handle a greater or smaller variety of good classes. It is also noted that in other example automated warehouses, the racking area may not be divided in sub-areas. In such automated warehouses, all goods can be stored anywhere in the racking area. Fig. 1 further shows that each sub-area comprises a climb tower for shuttles. In the first sub-area, the climb tower is denoted 114. The racking area 101 further comprises one or plural descent towers for shuttles, denoted 115 in Fig. 1. It is noticed that the racking construction with a number of climb towers and a number of descent towers is designed according to the specifications of the application, and therefore typically will depend on the number of bins to store, the number of SKUs (Stock Keeping Units), the required throughput, and the building layout.

The pick- and deposit area 102 of the automated warehouse 100 typically comprises a plurality of pick/deposit stations 121, each staffed by an operator 122 that fills bins 10 with goods that will be transferred from the pick/deposit station 121 to the racking area 101 by shuttles for temporary storage in the racking area 101, and that prepares orders for customers comprising goods that were temporarily stored in the racking area 101 and were transferred from their storage location to the pick/deposit station 121 by shuttles.

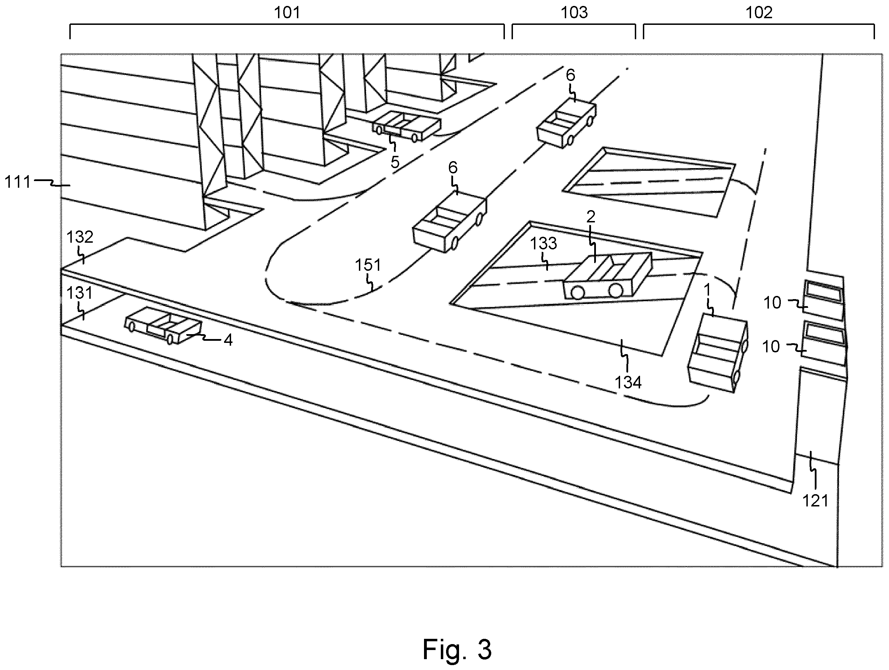

Fig. 1 further illustrates a typical path followed by shuttles whereto a pick/deposit task is assigned. This path consists of an inbound trajectory 140 that is followed by a shuttle taking a bin 14 from an origin pick/deposit station 121 to a storage location in the racking area 101 and deposit the bin 14 at that storage location, followed by an outbound trajectory 150 that is followed by the shuttle to pick a bin 15 from a storage location in the racking area 101 and return the latter bin 15 to a destined pick/deposit station 121 that might differ from the origin pick/deposit station. At a pick/deposit station 121, a shuttle 1 is at transit level 132, i.e. the level convenient for an operator 122 to unload a bin 10 from the shuttle 1 and to load the shuttle 1 with a new bin 11. The inbound trajectory 140 follows a path that takes the shuttle from transit level 132 to ground level 131 along a sloped passage 133. At ground level 131, the shuttle is buffered in the buffer area 103 until the occupancy of the storage area 101 (or a sub-area 111) of the storage area 101 has dropped below a certain level. The shuttle then continues towards the racking area 101 to use the climb tower 114 of the appropriate sub-area 111 where it has to deposit a bin 14, travels to a free storage location and deposits bin 14 at that storage location. Next, the shuttle moves to the storage location in the racking area 101 where it has to pick a bin 15. Preferably, the storage location of the bin 14 to deposit is close to the storage location of the bin 15 to pick, but it is also possible that the shuttle has to change level or even change sub-area in between depositing a bin 14 and picking a bin 15. Once the shuttle has picked bin 15, an outbound trajectory 150 is followed which takes the shuttle via a descent tower 115 to transit level 132. The shuttle leaves the racking area 101 at transit level 132 to be buffered in buffer area 103 until the occupancy level of the destined pick/deposit station 121 has dropped below a certain level. As soon as the latter condition is fulfilled, the shuttle is allowed to leave the buffer area 103 and moves at transit level 132 towards the destined pick/deposit station 121 to be unloaded there. Fig. 1 shows a first shuttle 1 carrying bin 11 at pick/deposit station 121, a second shuttle 2 carrying bin 12 moving on sloped passage 133 from the pick- and deposit area 102 to the buffer area 103, and a third shuttle 3 carrying bin 13 staying in buffer area 103 until the occupancy level of the racking area 101 has dropped below a certain level. A fourth shuttle 104 leaving the buffer area 103 at ground level 131 to enter the racking area 101 when its occupancy level allows so, is drawn in Fig. 3, as well as a fifth shuttle 5 leaving the racking area 101 at transit level 132 and entering the buffer area 103. Shuttle 4 and shuttle 5 are not drawn in Fig. 1 to avoid overloading this drawing. Fig. 1 at last shows a sixth shuttle 6 carrying bin 16 staying in buffer area 103 until the occupancy level of the destined pick/deposit station 121 has dropped below a certain level. As soon as this condition is fulfilled, shuttle 6 is allowed to leave the buffer area 103 and travel at transit level 132 to the position of shuttle 1 in Fig. 1 (if it is assumed that the destined pick/deposit station of shuttle 6 corresponds to the origin pick/deposit station of shuttle 1). The entire path followed by all shuttles in the automated warehouse 100 to perform pick/deposit tasks is controlled by a shuttle flow controller that monitors the locations of shuttles in the automated warehouse, assigns shuttles to pick/deposit tasks received from a warehouse management system, and navigates the shuttles through the automated warehouse while performing their assigned pick/deposit tasks.

Whereas Fig. 1 illustrates a racking system wherein outbound travelling shuttles leave the racking at transit level, it is notices that the exit for shuttles in the racking system may also be organised at plural levels. The exit may for instance be implemented as a plurality of mezzanines where shuttles can leave the racking area, one above the other, preferably at ergonomic height for the operator. Similarly, the entrance of the racking area for shuttles may contain plural levels, realized as plural mezzanines, one above the other. This way, space in the warehouse building is used more efficiently as the surface occupied by the front area and/or rear area will be further reduced.

It is noticed that an outbound travelling shuttle may also move from one pick/deposit station to another without returning to the racking area 101 in between. This may for instance be the case if the same goods, contained in a bin that is carried by the shuttle, appear in multiple picking tasks.

It is further remarked that a pick/deposit station may have multiple picking spots, for instance 2 or 3 picking spots, that help to increase the throughput. Multiple picking spots allow a shuttle to drop a bin and return with a different bin where the operator already picked goods from. An operator typically needs 10 to 15 seconds to perform a picking operation. If only one picking spot is available, a shuttle has to arrive at this spot, the operator has to perform the picking operation, and the shuttle has to wait in order to be able to return with the same bin. This means a loss in efficiency compared to a situation where multiple picking spots are available, a shuttle can drop off a bin and immediately return with a different bin already picked by the operator. The choice between one or plural picking spots at a pick/deposit station shall depend on the throughput demanded by the application.

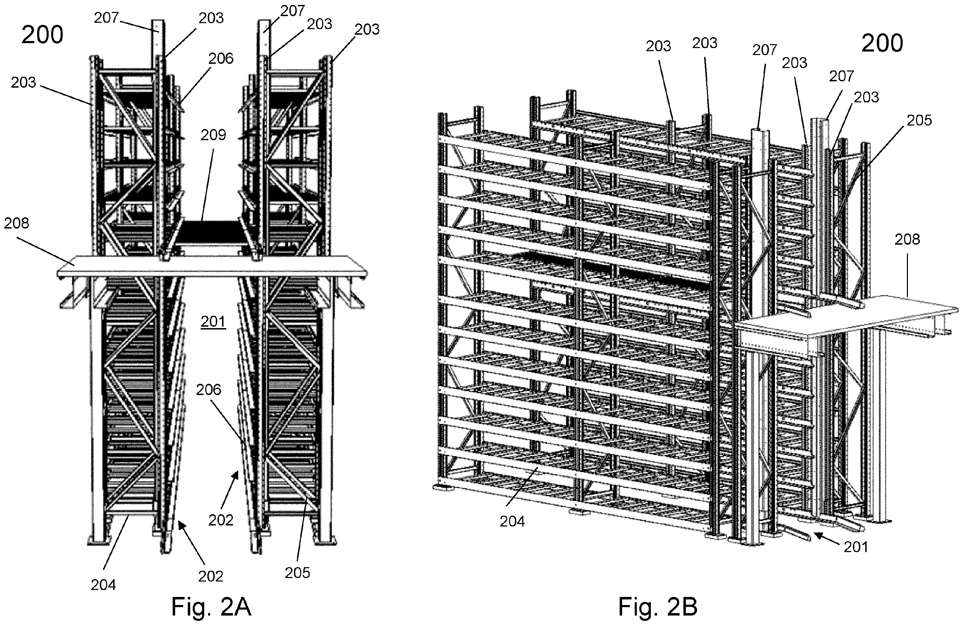

Fig. 2A and Fig. 2B illustrate an example of a small parts racking system 200 as used in the racking area 101 of the automated warehouse 100 shown in Fig. 1. In the racking system 200, parallel lanes or so-called aisles 201 are provided between vertical walls 202. Each vertical wall 202 represents a rack that is constructed using uprights 203, horizontal beams 204 and diagonal beams 205. The storage structure 200 typically extends over a plurality of levels, where bins containing goods, typically small parts, are stored. Each level is provided with horizontal tracks allowing horizontal movement of shuttles. Further, vertical tracks 207 may be provided to constitute climb towers and descent towers, allowing vertical movement of shuttles. At the end of an aisle 201, well above ground level, a mezzanine 208 may be provided, as well as a walkway 209.

Fig. 3 illustrates in more detail an example implementation of the buffer area 103 and pick- and deposit area 102 in the automated warehouse 100 of Fig. 1. Fig. 3 also partially shows the racking area 101, more particularly some of the racks or storage structures of the first sub-area 111. These racks may correspond to the storage structures 203 described here above with reference to Fig. 2. In the embodiment illustrated by Fig. 3, the buffer area 103 comprises a first carrousel for shuttles at ground level 131, not drawn in the figure, and a second carrousel 151 at transit level 132. The first and second carrousels are identical or nearly identical and allow to separate inbound traffic, i.e. shuttles travelling from the pick- and deposit area 102 to the racking area 101, from outbound traffic, i.e. shuttles travelling from the racking area 101 to the pick- and deposit area 102. Outbound travelling shuttles leave the racking area 101 at transit level 132 and stay on a platform or mezzanine until they have deposited a bin at a destined pick/deposit station 121. In Fig. 3, shuttle 5 is such an outbound travelling shuttle. Before entering the pick- and deposit area 102, the outbound travelling shuttles are buffered in carrousel 151. Fig. 3 for instance shows two outbound travelling shuttles 6 present in the carrousel 151. These shuttles 6 are navigated in a loop until the flow controller allows them to leave the carrousel 151 and continue towards their destined pick/deposit station 121. The flow controller, who is aware of the location of all shuttles in the automated warehouse, will allow an outbound travelling shuttle 6 buffered in carrousel 151 to proceed towards its destined pick/deposit station as soon as the occupancy of the pick/deposit station 121 has dropped below a certain level. If for instance the pick/deposit station 121 has 3 shuttle spots, the flow controller will allow a buffered shuttle 6 destined to deposit a bin at pick/deposit station 121 to leave the carrousel 151 and enter the pick- and deposit area 103 as soon as one of the shuttle spots at pick/deposit station 121 has become free. The flow controller shall at that time also decide which one of the buffered shuttles 6 with destined pick/deposit station 121 is allowed to leave the carrousel 151. This decision may be based on first-in-first-out order, or the shuttles may be re-sequenced by the flow controller in view of for instance the respective type of goods transported by the different shuttles, the schedule of customer orders prepared at the pick/deposit stations, the remaining battery capacity of shuttles, etc. When an outbound travelling shuttle 1 arrives at the pick/deposit station 121, a bin 10 will be removed from the shuttle 1 by an operator and the goods contained by the bin 10 will be used to complete a customer order. Fig. 3 also shows an inbound travelling shuttle 2. Such inbound travelling shuttle 2 uses a sloped passage 133 in a recess 134 of the transit platform to move from the transit level 132 to the ground level 131. When it arrives at the ground level 131, the inbound travelling shuttle 2 enters the buffer area 103 where it stays in a carrousel similar to carrousel 151 until the flow controller allows the shuttle to leave the carrousel and continue towards the racking area 101. The flow controller will allow a shuttle to leave the buffer area 103 and enter the racking area 101 as soon as the occupancy level of the racking area (or a sub-area thereof) has dropped below a certain threshold. It may again select the shuttle to leave the buffer area 103 based on first-in-first-out order or on a variety of other parameters like the class of goods transported, priorities of pick/deposit tasks, etc. In Fig. 3, shuttle 4 is allowed to leave the buffer area 103, inbound travelling towards the racking area 101 to deposit a bin for storage and pick a new bin for return to the pick- and deposit area 102.

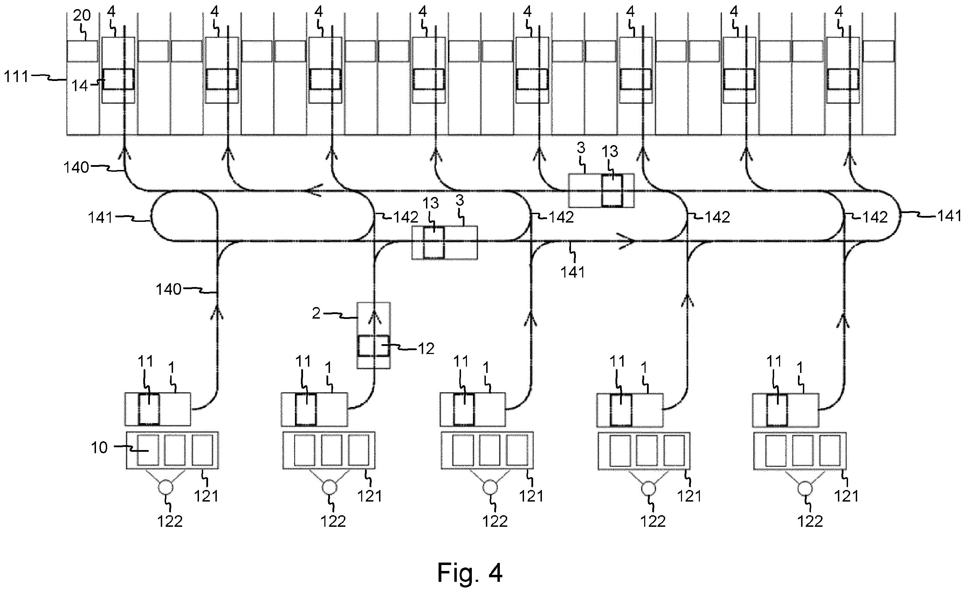

Fig. 4 is a scheme illustrating the inbound flow of shuttles in the automated warehouse 100 of Fig. 1. Fig. 4 shows the racking in the first sub-area 111 of the racking area 101 of warehouse 100, the carrousel 141 at ground level of the buffer area 103 of warehouse 100, and five pick/deposit stations 121 each staffed by an operator 122 in the pick-and deposit area 102 of warehouse 100. Shuttles 1 at the pick/deposit stations 121 receive bins 11 containing goods to be stored temporarily in the racking area 101. Under control of the flow controller, shuttles navigate along inbound path 140 from the pick-and deposit area 102 to the buffer area 103 where the shuttles are buffered until the occupancy level of the racking area 101 or a sub-area 111 thereof has dropped below a certain level. Shuttle 2 carrying bin 12 for instance represents a shuttle that is navigated from a pick/deposit station 121 to the carrousel 141. In the carrousel 141, each buffered shuttle 3, carrying a bin 13, makes loops until the flow controller allows the shuttle 3 to exit the buffer area and enter the racking area. For reasons of efficiency, the carrousel 141 may be implemented with one or plural subloops 142 allowing a shuttle to take a shortcut towards the exit assigned thereto by the flow controller at the point in time the shuttle may enter the racking area 101. Fig. 4 at last shows eight shuttles 4 in different lanes of the racking, each carrying a bin 14 to be deposited at an empty storage location in the racking. A stored bin is denoted 20 in Fig. 4.

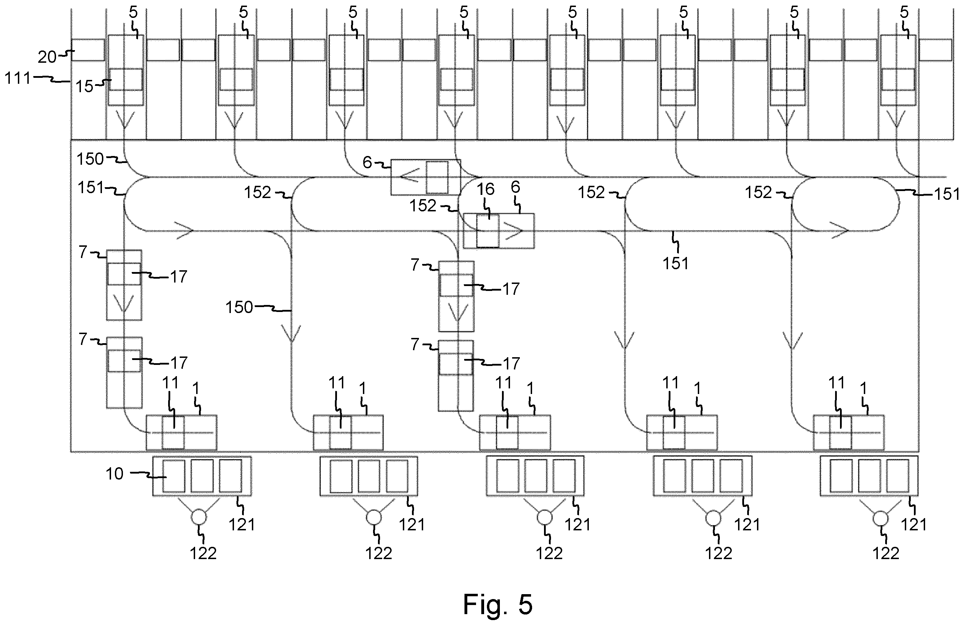

Fig. 5 is a scheme illustrating the outbound flow of shuttles in the automated warehouse 100 of Fig. 1. Fig. 5 shows the racking in the first sub-area 111 of the racking area 101 of warehouse 100, the carrousel 151 at transit level of the buffer area 103 of warehouse 100, and five pick/deposit stations 121 each staffed by an operator 122 in the pick-and deposit area 102 of warehouse 100. A stored bin is denoted 20 in Fig. 5. Shuttles 5, present in the racking area 101, pick a bin 15 from a storage location and return this bin 15 to one or several pick/deposit stations 121 where the goods contained by bin 15 will be used to prepare customer orders. Under control of the flow controller, shuttles navigate along outbound path 150 from the racking area 101 to the buffer area 103 where the shuttles are buffered until the occupancy level of one of the destined pick/deposit stations 121 has dropped below a certain level. In the buffer area 103, the shuttles enter carrousel 151: each buffered shuttle 6, carrying a bin 16, makes loops in the carrousel 151 until the flow controller allows the shuttle 6 to exit the carrousel 151 and proceed along outbound path 150 to one of its destined pick/deposit stations 121. The carrousel 151 preferably also has one or several sub-loops 152 that are used by a buffered shuttle to short-cut the path to the proper exit of the carrousel 151 at the time it is allowed to move towards one of the pick/deposit stations 121. In the example of Fig. 5, pick/deposit stations 121 have three shuttle spots. Apart from the shuttle 1 being handled by the operator 122 at pick/deposit station 121, two additional shuttles 7 containing respective bins 17 may be allowed to enter a pick/deposit station to occupy the second and third shuttle spots there. If these shuttle spots are equipped with battery charging technology, for instance a wireless battery charger or a battery charger with sliding contacts, the shuttle batteries can be charged while the shuttles are buffered at the pick/deposit stations 121.

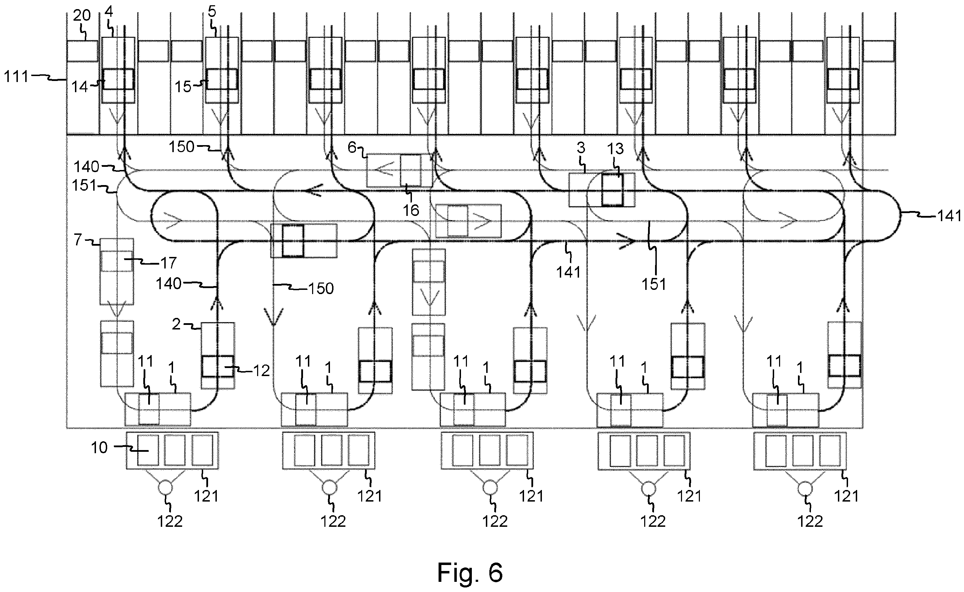

Fig. 6 is a scheme illustrating the combined inbound flow 140 of shuttles (with buffering in a first carrousel 141) and outbound flow 150 of shuttles (with buffering in a second carrousel 151) in automated warehouse 100. In the buffer area 103, the inbound carrousel 141 and outbound carrousel are implemented at different levels. Although drawn separate from each other in Fig. 6, i.e. inbound carrousel 141 shifted downward and rightward of outbound carrousel 151, both carrousels may in real-life be implemented straight above one another to minimize the total required space for the buffer area 103. In an alternative implementation, not illustrated by the figures, the inbound carrousel and outbound carrousel may be replaced by a single carrousel wherein both inbound travelling shuttles and outbound travelling shuttles are buffered before respectively navigating towards the racking area or pick- and deposit area. Such alternative implementation brings the advantage that the buffering of shuttles can be organised at a single level, but has the drawback that the risk for collisions between inbound traffic and outbound traffic.

It is noticed that in advantageous embodiments, the racking area has at any time sufficient empty storage locations in order to allow a shuttle to store a return bin close to the bin to be picked. In case the racking area is subdivided in sub-areas, each of these sub-areas preferably has sufficient empty storage locations at any time. With a filling degree of the racking area (or sub-areas thereof) that stays below 95%, preferably below 90 %, it is possible to have sufficient empty locations in the racking area (or its sub-areas) to realize this objective.

It is further also noticed that in advantageous embodiments, shuttles can flexibly be added to and/or removed from the automated warehouse in function of the load and desired throughput of the automated warehouse. Similarly, advantageous embodiments allow to flexibly add and/or remove pick/deposit stations in function of required throughput of the warehouse.

An automated warehouse system typically comprises 4 hierarchical system levels:
- the Warehouse Management System, abbreviated WMS;
- the Warehouse Control System, abbreviated WCS, which interfaces between several automated warehouse system components;
- the Shuttle Flow Controller, abbreviated SFC, with shuttle fleet management, shuttle selection and shuttle navigation as most important tasks; and
- the Shuttle Machine Controller, abbreviated SMC, with local shuttle kinematics and motor controls as main tasks.

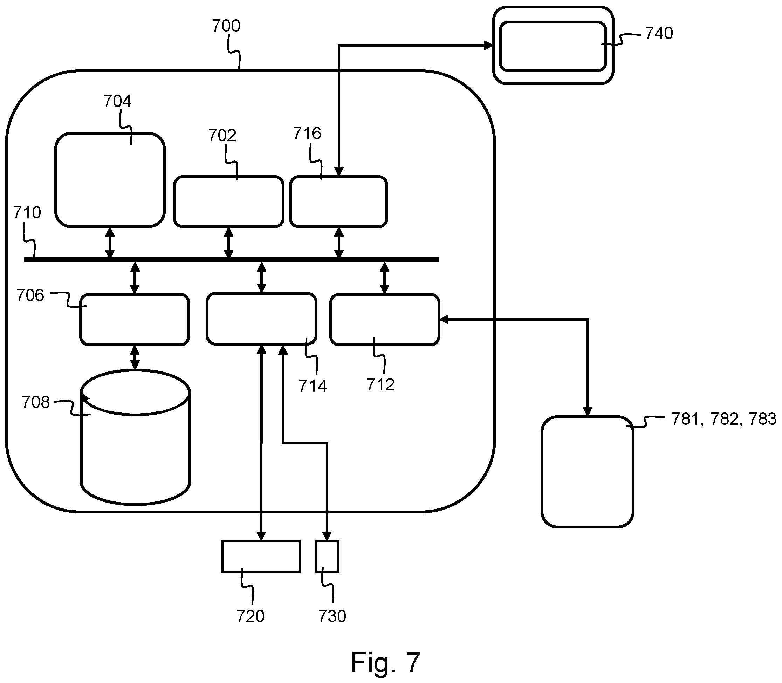

The present invention concerns the shuttle flow controller (SFC) with Fig. 7 showing a suitable computing system 700 enabling to implement embodiments of the automated warehouse shuttle flow controller according to the invention. Computing system 700 may in general be formed as a suitable general-purpose computer and comprise a bus 710, a processor 702, a local memory 704, one or more optional input interfaces 714, one or more optional output interfaces 716, a communication interface 712, a storage element interface 706, and one or more storage elements 708. Bus 710 may comprise one or more conductors that permit communication among the components of the computing system 700. Processor 702 may include any type of conventional processor or microprocessor that interprets and executes programming instructions. Local memory 704 may include a random-access memory (RAM) or another type of dynamic storage device that stores information and instructions for execution by processor 702 and/or a read only memory (ROM) or another type of static storage device that stores static information and instructions for use by processor 702. Input interface 714 may comprise one or more conventional mechanisms that permit an operator or user to input information to the computing device 700, such as a keyboard 720, a mouse 730, a pen, voice recognition and/or biometric mechanisms, a camera, etc. Output interface 716 may comprise one or more conventional mechanisms that output information to the operator or user, such as a display 740, etc. Communication interface 712 may comprise any transceiver-like mechanism such as for example one or more Ethernet interfaces that enables computing system 700 to communicate with other devices and/or systems, for example with other computing devices 781, 782, 783. The communication interface 712 of computing system 700 may be connected to such another computing system by means of a local area network (LAN) or a wide area network (WAN) such as for example the internet. Storage element interface 706 may comprise a storage interface such as for example a Serial Advanced Technology Attachment (SATA) interface or a Small Computer System Interface (SCSI) for connecting bus 710 to one or more storage elements 708, such as one or more local disks, for example SATA disk drives, and control the reading and writing of data to and/or from these storage elements 708. Although the storage element(s) 708 above is/are described as a local disk, in general any other suitable computer-readable media such as a removable magnetic disk, optical storage media such as a CD or DVD, - ROM disk, solid state drives, flash memory cards, ... could be used.

As used in this application, the term "circuitry" may refer to one or more or all of the following:
(a) hardware-only circuit implementations such as implementations in only analog and/or digital circuitry and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and/or processor(s), such as microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in a server, a cellular network device, or other computing or network device.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. An automated warehouse shuttle flow controller (700) configured to control navigation of shuttles (1-7) in an automated warehouse (100) with a racking area (101) comprising one or more racks for storage of goods in bins (10-17) and a pick- and deposit area (102) comprising one or more pick/deposit stations (121),
wherein said flow controller (700) is configured to:
- monitor actual locations of shuttles (1-7) within said automated warehouse (100);
- select a shuttle (1-7) to perform a pick/deposit task wherein said shuttle (1-7) deposits a bin (14) on a storage location in said racking area (101) and/or picks a bin (15) from a storage location in said racking area (101) for transfer to one or more dedicated pick/deposit stations (121);
- navigate said shuttle (1-7) through said automated warehouse (121);
- navigate outbound travelling shuttles (5-7), being shuttles travelling from said racking area (101) to said pick- and deposit area (102), at a first level (132); and
- navigate inbound travelling shuttles (2-4), being shuttles travelling from said pick- and deposit area (102) to said racking area (101), at a second level (131) different from said first level (132),
wherein said pick- and deposit area (102) comprises a transit platform at said first level (132), said transit platform having at least one recess (134) with sloped passage (133) from said first level (132) to said second level (131); and
wherein said flow controller (700) is configured to navigate said shuttle (2) from said first level (132) to said second level (131) through said recess (134) after a pick/deposit operation at one of said dedicated pick/deposit stations (121).

2. An automated warehouse shuttle flow controller (700) according to claim 1,
wherein said first level (132) corresponds to the transit level of said pick/deposit stations (121) and said second level (131) corresponds to the ground level or a mezzanine level of said automated warehouse (100).

3. An automated warehouse shuttle flow controller (700) according to claim 1 or claim 2,
wherein said flow controller (700) is configured to keep said shuttle (1-7) in a buffer area (103) between said racking area (101) and said pick- and deposit area (102) in view of occupancy of said racking area (101) by other shuttles or occupancy of said one or more dedicated pick/deposit stations (121) by other shuttles.

4. An automated warehouse shuttle flow controller (700) according to claim 3,
wherein said buffer area (103) comprises a carrousel (141, 151), and
wherein said flow controller (700) is configured to keep said shuttle (1-7) in said carrousel (141, 151) until said occupancy of said racking area (101) has dropped below a predefined level or until said occupancy of said one or more dedicated pick/deposit stations (121) has dropped below a predefined level.

5. An automated warehouse shuttle flow controller (700) according to claim 3 or claim 4,
wherein said buffer area (102) comprises a first carrousel (151) at said first level (132) and a second carrousel (141) at said second level (131); and
wherein said flow controller (700) is configured to:
- keep said shuttle (6) in said first carrousel (151) until said occupancy of said one or more dedicated pick/deposit stations (121) has dropped below a predefined level when said shuttle (6) is outbound travelling, and/or
- keep said shuttle (3) in said second carrousel (141) until said occupancy of said racking area (101) has dropped below a predefined level when said shuttle (3) is inbound travelling.

6. An automated warehouse shuttle flow controller (700) according to any of claims 3 to 5,
wherein a pick/deposit station (121) has a plurality of shuttle spots; and
wherein said flow controller (700) is configured to keep said shuttle (6) in said buffer area (103) until one of said shuttle spots is unoccupied.

7. An automated warehouse shuttle flow controller (700) according to claim 6,
wherein one or more of said shuttle spots comprise electric charging means to fast-charge said shuttle (7) during a pick/deposit operation at said pick/deposit station (121).

8. An automated warehouse shuttle flow controller (700) according to any of claims 3 to 6,
wherein said flow controller (700) is configured to keep said shuttle (3) in said buffer area (103) until the amount of shuttles in said racking area (101) has dropped below a predefined number.

9. An automated warehouse shuttle flow controller (700) according to any of claims 3 to 8,
wherein said shuttle (1-7) is selected to perform a pick/deposit task in a sub-area (111, 112, 113) of said racking area (101), said sub-area (111, 112, 113) being dedicated to either store slow moving goods, medium speed moving goods, or fast moving goods; and
wherein said flow controller (700) is configured to keep said shuttle (6) in said buffer area (103) until the amount of shuttles in said sub-area (111, 112, 113) of said racking area (101) has dropped below a predefined number.

10. An automated warehouse shuttle flow controller (700) according to any of claims 3 to 9,
wherein said shuttle flow controller (700) is configured to keep said shuttle (1-7) in said buffer area (103) to re-sequence the order of shuttles.

11. An automated warehouse shuttle flow control process for controlling navigation of shuttles (1-7) in an automated warehouse (100) with a racking area (101) comprising one or more racks for storage of goods in bins (10-17) and a pick- and deposit area (102) comprising one or more pick/deposit stations (121), said flow control process comprising:
- monitoring actual locations of shuttles (1-7) within said automated warehouse (100);
- selecting a shuttle (1-7) to perform a pick/deposit task wherein said shuttle (1-7) deposits a bin (14) on a storage location in said racking area (101) and/or picks a bin (15) from a storage location in said racking area (101) for transfer to one or more dedicated pick/deposit stations (121);
- navigating said shuttle (1-7) through said automated warehouse (100);
- navigating outbound travelling shuttles (5-7), being shuttles travelling from said racking area (101) to said pick- and deposit area (102), at a first level (132); and
- navigating inbound travelling shuttles (2-4), being shuttles travelling from said pick- and deposit area (102) to said racking area (101), at a second level (131) different from said first level (132),
wherein said pick- and deposit area (102) comprises a transit platform at said first level (132), said transit platform having at least one recess (134) with sloped passage (133) from said first level (132) to said second level (131); and
wherein said flow control process comprises:
- navigating said shuttle (2) from said first level (132) to said second level (131) through said recess (134) after a pick/deposit operation at one of said dedicated pick/deposit stations (121).

12. An automated warehouse (100) comprising:
- a racking area (101) comprising one or more racks for storage of goods in bins (10-17);
- a pick- and deposit area (102) comprising one or more pick/deposit stations (121);
- a plurality of shuttles (1-7); and
- a shuttle flow controller (700) configured to:
- monitor actual locations of shuttles (1-7) within said automated warehouse (100);
- select a shuttle (1-7) to perform a pick/deposit task wherein said shuttle (1-7) deposits a bin (14) on a storage location in said racking area (101) and/or picks a bin (15) from a storage location in said racking area (101) for transfer to one or more dedicated pick/deposit stations (121);
- navigate said shuttle (1-7) through said automated warehouse (100);
- navigate outbound travelling shuttles (5-7), being shuttles travelling from said racking area (101) to said pick- and deposit area (102), at a first level (132); and
- navigate inbound travelling shuttles (2-4), being shuttles travelling from said pick- and deposit area (102) to said racking area (101), at a second level (131) different from said first level (132),
wherein said pick- and deposit area (102) comprises a transit platform at said first level (132), said transit platform having at least one recess (134) with sloped passage (133) from said first level (132) to said second level (131); and
wherein said flow controller (700) is configured to navigate said shuttle (2) from said first level (132) to said second level (131) through said recess (134) after a pick/deposit operation at one of said dedicated pick/deposit stations (121).
